(19) Europäisches Patentamt European Patent Office Office européen des brevets

(11) **EP 4 458 765 A1**

(12) **EUROPEAN PATENT APPLICATION**
published in accordance with Art. 153(4) EPC

(43) Date of publication:
**06.11.2024 Bulletin 2024/45**

(21) Application number: **22916363.9**

(22) Date of filing: **01.11.2022**

(51) International Patent Classification (IPC):
*C01B 32/182* (2017.01)    *C01B 32/198* (2017.01)
*C01B 32/23* (2017.01)

(52) Cooperative Patent Classification (CPC):
**C01B 32/182; C01B 32/198; C01B 32/23**

(86) International application number:
**PCT/KR2022/016903**

(87) International publication number:
**WO 2023/128209 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2021 KR 20210188962**

(71) Applicant: **Dongjin Semichem Co., Ltd.
Incheon 22824 (KR)**

(72) Inventors:
• **AN, Woo Hyun**
  **Seongnam-si Gyeonggi-do 13486 (KR)**
• **LEE, Joo Cheol**
  **Seongnam-si Gyeonggi-do 13486 (KR)**
• **YANG, Hwi Chan**
  **Seongnam-si Gyeonggi-do 13486 (KR)**
• **KIM, Seung Du**
  **Seongnam-si Gyeonggi-do 13486 (KR)**

(74) Representative: **Grünecker Patent- und
Rechtsanwälte
PartG mbB
Leopoldstraße 4
80802 München (DE)**

(54) **GRAPHITE OXIDE, GRAPHENE OXIDE, AND REDUCED GRAPHENE OXIDE**

(57) The present disclosure relates to graphite oxide, graphene oxide, and reduced graphene oxide and, more specifically, to graphite oxide, graphene oxide, and reduced graphene oxide in which graphene oxide includes 25 to 45 at% of oxygen (O) and is effectively exfoliated from graphite oxide, and can embody excellent powder conductivity after reduction.

EP 4 458 765 A1

**Description**

**[TECHNICAL FIELD]**

The present disclosure relates to graphite oxide, graphene oxide, and reduced graphene oxide.

**[BACKGROUND ART]**

Graphite is a laminated structure in which carbon atoms are connected in a hexagonal shape to form a two-dimensional layered structure, and these layers are stacked one on top of the other to form a layered structure. One layer of this graphite is called graphene.

Graphene has been called a new dream material since the early 2000s as it is characterized by having a tensile strength 200 times more excellent than that of steel, an electron mobility that is 1,000 times more excellent than that of silicon, and a thermal conductivity that is 10 times more excellent than that of copper.

Due to the above-mentioned characteristics of graphene, research is underway to apply it to various application fields such as inks, barriers, heat dissipation, energy, semiconductors, and transparent electrodes in the field of nanomaterials.

Graphene can be manufactured by various exfoliation methods, and a chemical exfoliation method among them is known to be an easy method for mass production. The graphene chemical exfoliation method manufactures graphene by a method of oxidizing graphite to exfoliate it in a solution and then restoring conductivity through a reduction process. In the chemical exfoliation method, a technology of efficiently inserting an oxidizing agent between graphite layers to minimize defects on the graphene surface and efficiently reducing them after exfoliation is important.

**[DETAILED DESCRIPTION OF INVENTION]**

**[TECHNICAL PROBLEMS]**

An object of the present disclosure is to provide graphene oxide that can minimize defects in reduced graphene.

Another object of the present disclosure is to provide graphite oxide that can minimize defects in reduced graphene.

Another object of the present disclosure is to provide reduced graphene oxide with excellent powder conductivity.

**[TECHNICAL SOLUTION]**

In order to achieve the above object, graphene oxide according to one embodiment of the present disclosure is characterized by comprising oxygen (O) in an amount of 25 to 45 at%.

At this time, graphene oxide may have an atomic ratio of carbon (C) and oxygen (O) of 1.2: 1 to 3: 1.

Graphene oxide above may have an (intensity of D peak)/(intensity of G peak) (D/G ratio) of 0.80 to 0.90 in a Raman spectrum using a Raman spectrometer.

Graphene oxide above may have properties that satisfy Equation 1 below when using data obtained through X-ray diffraction (XRD) analysis.

$$[\text{Equation 1}]$$

$$0 \leq (H2)/(H1+H2) < 0.1$$

In Equation 1, H1 is a peak value for graphene oxide in which the maximum peak is observed in the range of 10° to 12° of $2\theta$ in the data graph obtained by X-ray diffraction (XRD) analysis, and H2 is a peak value for unreacted graphite in which the maximum peak is observed in the range of 25° to 28° of $2\theta$ in the data graph obtained by XRD analysis.

Graphite oxide according to another embodiment of the present disclosure includes graphene oxide above.

Graphite oxide above includes graphene oxide above in multiple layers, and graphene oxide above may have an average interlayer distance of 0.7 to 0.9 nm.

Reduced graphene oxide according to another embodiment of the present disclosure is one in which graphene oxide above is reduced.

Reduced graphene oxide above may comprise oxygen (O) in an amount of more than 0 at% to not more than 5 at% based on the total content.

Reduced graphene oxide above may exhibit the characteristic of having a full width at half maximum (FWHM) of a peak in the 20 to 26.5° region of an X-ray diffraction (XRD) spectrum of 0.5 to 5°.

Reduced graphene oxide above may exhibit the characteristic of having a weight loss rate of more than 0 at% to not more than 20 wt% when the temperature is raised from 25°C to 500°C.

Reduced graphene oxide above may have a density of 0.001 to 0.1 g/mL.

**[EFFECT OF INVENTION]**

Graphene oxide according to the present disclosure can be effectively exfoliated from graphite oxide even at a ratio of small oxidation reaction groups, and reduced graphene oxide of the present disclosure in which graphene oxide with the small oxidation reaction groups is reduced can realize excellent powder conductivity.

**[BEST MODE FOR CARRYING OUT THE INVENTION]**

Terms or words used in this specification and claims should not be construed as limited to their common or dictionary meanings, and they must be interpreted with meanings and concept consistent with the technical idea of the present disclosure based on the principle that the inventor can appropriately define the concepts of terms in order to explain his or her invention in the best way.

Therefore, since the configurations shown in Examples and Preparation Examples described in this specification are only one of the most preferred embodiments of the present disclosure, and do not represent all of technical ideas of the present disclosure, it should be understood that there may be various equivalents and variations capable of replacing them at the time of the present application.

Hereinafter, embodiments of the present disclosure will be described in detail so that those skilled in the art to which the present disclosure pertains can easily implement it. However, the present disclosure may be implemented in various different forms and is not limited to the Preparation Examples and Examples described herein.

Oxygen in graphene oxide is derived from an oxidation reaction group formed on the surface of graphene. The oxidation reaction group formed on the surface of graphene is formed during the process of exfoliating graphene, but after exfoliating graphene, graphene oxide must be reduced again, and in the process of reducing the oxidation reaction group of graphene oxide, defects occur on the graphene surface, and a decrease in the conductive properties of reduced graphene oxide may be caused. Therefore, the oxygen content of graphene oxide is formed to an extent only that can exfoliate graphene, and the less oxygen is comprised, the better.

Graphene oxide according to one embodiment of the present disclosure comprises 25 to 45 at% of oxygen (O). That is, graphene oxide consists of 25 to 45% of oxygen (O) out of the total atoms. The oxygen content of graphene oxide is a numerical value that is lower than 50 at%, which is the oxygen content of conventional graphene oxide, and the proportion of oxidation reaction groups that must be reduced in graphene oxide according to the embodiment of the present disclosure is smaller than that of conventional graphene oxide, so defects that reduce the conductive properties of graphene that occur during the reduction process of graphene oxide can be greatly reduced.

When graphene oxide of the present disclosure comprises less than 25 at% of oxygen, an oxidation reaction group that is not formed to an extent that can exfoliate graphene, and there is a problem in that the exfoliation of graphene through the oxidation reaction group is not sufficiently achieved, and when graphene oxide comprises oxygen more than 45 at% of oxygen, there is no significant difference from the content of conventional graphene oxide, and in the process of reducing graphene oxide, there is a problem in that electrical conductivity drops significantly like conventional graphene oxide. In order to more clearly show the difference in effect from conventional graphene oxide, it may be preferred that graphene oxide comprises oxygen at 25 to 35 at%.

In order to realize the low oxygen content of graphene oxide, a technology is needed to effectively exfoliate graphene while using a small amount of an oxidizing agent in the process of oxidizing graphite, which is a layered structure of graphene, and for example, this can be solved by applying a physical force to graphite during the process of performing oxidation by injecting the oxidizing agent into graphite. More specifically, the physical force may be shear stress, and when shear stress is applied along with the oxidizing agent in the process of oxidizing graphite, the oxidizing agent can be efficiently used while the oxidizing agent is being effectively injected into the central portion of graphite compared to simple diffusion, and graphite can be effectively exfoliated even with the less amount of the oxidizing agent.

The oxygen content of graphene oxide above can be analyzed through X-ray photoelectron spectroscopy (XPS), and the content ratio of carbon and oxygen in graphene oxide can be known through XPS.

The oxygen ratio of graphene oxide above is 25 to 45 at% when expressed in at%, which is the atomic ratio, and the atomic ratio (atom number ratio) of carbon and oxygen may be 1.2:1 to 3:1 when it is expressed as the atomic ratio (carbon: oxygen) of carbon (C) and oxygen (O), which are the main components of graphene oxide. Carbon above is the basic atom of graphene, and if the oxygen ratio is less than the above atomic ratio, there may be a problem in that graphene oxide cannot be sufficiently exfoliated from the stacked structure of graphite into a single layer structure, and if the oxygen atomic ratio of oxygen is high compared to the above atomic ratio, there may be a problem in that graphene surface defects frequently occur during the process of preparing reduced graphene oxide, resulting in a significant decrease in the electrical conduction characteristics of reduced graphene oxide.

The oxygen content of graphene oxide can be confirmed through a Raman spectrum by a Raman spectrometer, and graphene oxide according to the embodiment of the present disclosure comprising oxygen in the range of 25 to 45 at% may have an (intensity of D peak)/(intensity of G peak) in the Raman spectrum, that is, the D/G ratio represented as 0.80 to 0.90. When the D/G ratio of graphene oxide is expressed as less than 0.80 as the D/G ratio in the Raman spectrum refers to the degree of change in the ordering of the carbon structure, there may be a problem in that graphene oxide cannot be sufficiently exfoliated from graphite, and when the D/G ratio of graphene oxide exceeds 0.90, there may be a problem in that the electrical conduction characteristics of reduced graphene oxide are unnecessarily decreased after reducing graphene oxide as an unnecessarily large number of oxidation reaction groups are formed on graphene oxide.

Graphene oxide above can be prepared by exfoliating graphite oxide in which graphite is oxidized, and specifically, the part of graphite oxide where the interlayer distance is widened and the bonding energy between layers is weak can be exfoliated with graphene oxide using a physical method such as an ultrasonic pulverizer.

The average interlayer distance of graphene oxide above can be confirmed through X-ray diffraction (XRD) analysis. XRD analysis uses Bragg's law, and the 2θ (2 theta) value of XRD is calculated using Bragg's equation and converted to the interlayer distance, and in the case of raw material graphite, a peak point appears in the region of 26.3°, and as the distance between layers of graphite increases, the peak point shifts to the left in the XRD graph. Graphene oxide according to the embodiment of the present disclosure can satisfy Equation 1 below when using XRD analysis.

[Equation 1]

$$0 \le (H2)/(H1+H2) < 0.1$$

In Equation 1, H1 is the peak value for graphene oxide in which the maximum peak is observed in the range of 10° to 12° of 2θ in the data graph obtained by X-ray diffraction (XRD) analysis, and H2 is the peak value for unreacted graphite in which the maximum peak is observed in the range of 25° to 28° of 2θ in the data graph obtained by XRD analysis.

Graphite oxide according to another embodiment of the present disclosure is a state after graphite is oxidized and before being exfoliated into graphene oxide above according to the embodiment of the present disclosure. The low oxygen content of graphene oxide of the present disclosure is derived from the characteristics of graphite oxide, and the individual graphene oxide layers constituting graphite oxide of the present disclosure have characteristics in which oxidation reaction groups are evenly formed up to the central portion of graphite oxide while having a low oxygen content compared to conventional graphite oxide.

The characteristics of graphite oxide according to the embodiment of the present disclosure can be confirmed through the distance between layers of graphite oxide. In a graphite oxide structure in which graphene oxide is stacked in multiple layers, the average interlayer distance of graphene oxide refers to the distance between neighboring graphene oxides. Graphite oxide according to the embodiment of the present disclosure may have an average interlayer distance of graphene oxide narrower than the average interlayer distance of conventional graphene oxide due to a lower oxygen ratio than conventional graphite oxide, and specifically, graphene oxide according to the embodiment of the present disclosure may have an average interlayer distance of 0.7 to 0.9 nm. If the average interlayer distance of graphene oxide above is less than 0.7 nm, a problem may occur in which the exfoliation of graphite oxide is not easily performed, and if the average interlayer distance of graphene oxide above is more than 0.9 nm, this means that many oxidation reaction groups are unnecessarily formed on graphene, and thereafter, many defects may be formed in the process of forming reduced graphene oxide, and a problem may be caused in which the electrical conduction characteristics of reduced graphene oxide are decreased.

Reduced graphene oxide (rGO) according to another embodiment of the present disclosure is one in which graphene oxide above according to the embodiment of the present disclosure is reduced, and to which electrical conduction characteristics are imparted by reducing exfoliated graphene oxide. Reduced graphene oxide according to the embodiment of the present disclosure is one in which graphene oxide with a low oxygen ratio (25 to 45 at%) is reduced, and since the ratio of reduced oxidation reaction groups in the process of reducing graphene oxide is low compared to that of conventional graphene oxide, there are characteristics in that the loss of electrical conduction characteristics that occurs during the reduction process is small, and the electrical conductivity (powder conductivity) of reduced graphene oxide is improved compared to conventional reduced graphene oxide.

Reduced graphene oxide according to the embodiment of the present disclosure is derived from graphene oxide with a low oxygen content, and there is characteristic in that the oxygen content of reduced graphene oxide is also very low, and specifically, reduced graphene oxide may comprise oxygen (O) in a very low amount of more than 0 at% to not more than 5 at% relative to the total content including carbon. Oxygen comprised in reduced graphene oxide is derived from the oxidation reaction groups remaining after failing to be reduced during the process of reducing graphene oxide, and reduced graphene oxide cannot help comprising any oxidation reaction group at all (more than 0 at%). However, reduced graphene oxide according to the embodiment of the present disclosure is one in which graphene oxide with a low oxygen ratio (25 to 45 at%) is reduced, and reduced graphene oxide may comprise 5 at% or less of oxygen, and if reduced graphene oxide comprises more than 5 at% of oxygen, there may be a problem in that the electrical conduction characteristics of reduced graphene oxide are significantly lowered.

The oxygen content of reduced graphene oxide can be confirmed through an X-ray diffraction (XRD) spectrum, reduced graphene oxide of the present disclosure is derived from graphene oxide with a low oxygen content, and thus the oxygen ratio is lower than conventional reduced graphene oxide, and this can be confirmed through the full width at half maximum (FWHM) of the peak in the 20 to 26.5° region of the X-ray diffraction (XRD) spectrum of 0.5 to 5°.

Weight loss of reduced graphene oxide occurs due to the oxidation reaction groups during the temperature raising process due to oxidation reaction groups remaining on the surface. Reduced graphene oxide according to the embodiment of the present disclosure may exhibit features that the weight loss rate is insignificant even when the temperature is raised to high temperatures due to characteristics that it has a very small ratio of remaining oxidation reaction groups derived from graphene oxide compared to conventional reduced graphene oxide. For example, reduced graphene oxide according to the embodiment of the present disclosure may have a weight loss rate of more than 0 at% to not more than 20 wt% when the temperature is raised from 25°C to 500°C. The weight loss rate analysis can be confirmed through thermogravimetric analysis (TGA).

Reduced graphene oxide according to the embodiment of the present disclosure may have a density of 0.001 to 0.1 g/mL. Reduced graphene oxide of the present disclosure has a low oxygen content, which can be confirmed from its low density compared to conventional reduced graphene oxide.

Hereinafter, the present disclosure will be described in more detail through Examples, but the present disclosure is not limited to Examples below.

### [Preparation Example 1: Preparation of graphite oxide]

The temperature of the reaction tank is cooled to 10°C while stirring 1 L of a sulfuric acid solution and 40 g of graphite in a double jacket reaction tank.

After sufficiently cooling up to the central portion of the sulfuric acid solution, 160 g of potassium permanganate is slowly added to an extent that the temperature was not improved locally. Stirring is performed in the reaction tank for 30 minutes from a time of completing the addition of potassium permanganate, and the reaction tank is blocked during stirring to prevent reaction with external moisture.

After stabilizing the reaction of potassium permanganate by proceeding stirring for 30 minutes, shear stress is applied to the solution. As an exemplary method of applying shear stress, shear stress is applied to graphite using a Couette-Taylor reactor in this Preparation Example. To apply the shear stress, the rotation speed of the inner cylinder included in the Couette-Taylor reactor was 1500 rpm, and the rotation time was set to 60 minutes.

The oxidizing agent (potassium permanganate) is subjected to an oxidation reaction until the oxidizing agent was inserted up to the central portion of graphite along with the application of shear stress. For example, if the reaction is performed for one hour based on 150 μm graphite particles, it can be inserted up to the central portion.

When the oxidation reaction is finished, hydrogen peroxide is added in order to terminate the oxidation reaction of potassium permanganate. Graphite oxide can be produced while adding hydrogen peroxide until no bubbles are generated.

Metal impurities and acid ions other than graphite oxide produced above are removed. To remove metal ions, graphite oxide and metal ions are separated through a filter by ionizing the metal using an acid such as hydrochloric acid. After finishing sufficient cleaning, graphite oxide (Example 1) can be obtained by separating graphite oxide and acid ions through a filter by neutralizing the acid with distilled water in order to wash the acid.

Examples 2 to 4 and Comparative Examples 1 to 2 were prepared by varying only the amount of oxidizing agent (potassium permanganate) and the amount of acid (sulfuric acid) with respect to graphite oxide of Example 1 above, and are shown in Table 1 below.

[Table 1]

|  | Graphite | Potassium permanganate | Sulfuric acid |
|---|---|---|---|
| Example 1 | 1g | 4g | 25mL |
| Example 2 | 1g | 4g | 30mL |
| Example 3 | 1g | 3.5g | 30mL |

(continued)

| | Graphite | Potassium permanganate | Sulfuric acid |
|---|---|---|---|
| Example 4 | 1g | 3.5g | 25mL |
| Comparative Example 1 | 1g | 2g | 30mL |
| Comparative Example 2 | 1g | 5g | 25mL |

**[Experimental Example 1-1: Comparison of interlayer distances of graphite oxide]**

Examples 1 to 4 and Comparative Examples 1 to 2 in Table 1 of Preparation Example 1 above were subjected to XRD (LabX XRD-6100, SHIMADZU) analysis to show the average interlayer distances of graphite oxide in Table 2 below.

**[Experimental Example 1-2: Comparison of powder conductivities of graphite oxide]**

Powder conductivities are measured to analyze the electrical conductivities of graphene in a powder state into a powder form. The conductivity values that change depending on the loads through the conductivity probe while comprising the same amount of powder (0.1g) in the measuring cell and applying loads can be read, and the results are compared with the powder conductivity value under 2,000 kgf conditions.
The powder conductivities of graphite oxides of Examples 1 to 4 and Comparative Examples 1 to 2 of Table 1 above were measured using a powder resistivity measurement system (HPRM-FA2, HANTech) and are shown in Table 2 below.

[Table 2]

| | Example 1 | Example 2 | Example 3 | Example 4 | Comparative Example 1 | Comparative Example 2 |
|---|---|---|---|---|---|---|
| Interlayer distance (nm) | 0.7 | 0.81 | 0.86 | 0.9 | 0.65 | 1.03 |
| Powder conductivity (S/cm) | 2.6 | 3.9 | 4.1 | 2.8 | 1.57 | 0.88 |

Referring to Table 2, it can be confirmed that the powder conductivities of the graphite oxides according to the Examples of the present disclosure are higher than those of the Comparative Examples due to the low oxygen content.
In Comparative Example 1 of Table 2, the content of potassium permanganate is too small and the oxidizing power of the oxidizing agent is not sufficiently secured, so there is a problem in that the oxidation cannot be performed up to the central portion of graphite. In other words, although the carbon/oxygen atomic ratio is high and the D/G ratio is low, this can confirm that the powder conductivity characteristics are shown to be low due to the large amount of unreacted graphite.
On the other hand, when the content of potassium permanganate in Comparative Example 2 is added in an excessive amount, the oxidizing power of the oxidizing agent is sufficient, but graphite is peroxidized due to the excessive amount of the oxidizing agent, which can confirm that many defects are caused during reduction to decrease the powder conductivity characteristics.

**[Preparation Example 2: Preparation of graphene oxide]**

Graphite oxide prepared in Preparation Example 1 above can be exfoliated into graphene oxide by applying physical energy through an ultrasonic grinder or the like to a place where the binding force is weakened due to the widening of the interlayer distance. Graphene oxide (Example 1) can be obtained by exfoliating graphite oxide into graphene oxide through an exfoliation process for 1 hour or more based on a 700W reactor.
Examples 2 to 15 and Comparative Examples 1 to 3 were prepared by varying only the amount of oxidizing agent (potassium permanganate) and the amount of acid (sulfuric acid) with respect to graphite oxide prepared in Example 1 above, and are shown in Table 3 below.

[Table 3]

|  | Graphite | Potassium permanganate | Sulfuric acid |
|---|---|---|---|
| Example 1 | 1 g | 4 g | 25 mL |
| Example 2 | 1 g | 4 g | 30 mL |
| Example 3 | 1 g | 3.5 g | 30 mL |
| Example 4 | 1 g | 3.5 g | 25 mL |
| Example 5 | 1 g | 3 g | 20 mL |
| Example 6 | 1 g | 3 g | 22 mL |
| Example 7 | 1 g | 3.5 g | 24 mL |
| Example 8 | 1 g | 3.5 g | 23 mL |
| Example 9 | 1 g | 3.5 g | 20 mL |
| Example 10 | 1 g | 4 g | 20 mL |
| Example 11 | 1 g | 4 g | 28 mL |
| Example 12 | 1 g | 4 g | 27 mL |
| Example 13 | 1 g | 4 g | 26 mL |
| Example 14 | 1 g | 4 g | 24 mL |
| Example 15 | 1 g | 3.5 g | 27 mL |
| Comparative Example 1 | 1 g | 2 g | 30 mL |
| Comparative Example 2 | 1 g | 5 g | 25 mL |
| Comparative Example 3 | 1 g | 5 g | 30 mL |

**[Experimental Example 2-1: Comparison of oxygen contents of graphene oxide]**

XPS analysis is used to analyze the carbon and oxygen contents of graphene oxide. The results of the carbon and oxygen content ratio are checked by calculating the ratio of the bonding strength values confirmed by the XPS wide scan value and converting the bonding strength in the C1s and O1s areas into a C/O ratio.
The oxygen contents (at%) and the atomic ratios of carbon and oxygen (C/O ratios) of graphene oxide through XPS for Examples 1 to 17 and Comparative Examples 1 to 3 of Preparation Example 2 above are shown in Table 4 below.

**[Experimental Example 2-2: Comparison of XRD analysis of graphene oxide]**

Examples 1 to 17 and Comparative Examples 1 to 3 of Preparation Example 2 above were subjected to XRD (LabX XRD-6100, SHIMADZU) analysis to show the (H2)/(H1+H2) values in Table 4 below. At this time, H1 is the peak value for graphene oxide in which the maximum peak is observed in the range of 10° to 12° of 2θ in the data graph obtained by X-ray diffraction (XRD) analysis, and H2 is the peak value for unreacted graphite in which the maximum peak is observed in the range of 25° to 28° of 2θ in the data graph obtained by XRD analysis.

**[Experimental Example 2-3: Comparison of Raman spectrum analysis of graphene oxide]**

Raman analysis checks the degree of change in the regularization of the graphite structure caused by defects, reaction groups, etc. on the graphite layer. In general, the more graphene oxide is combined with a reaction group, the larger the D/G ratio becomes, and when the structure of the layer is restored after reduction, the D/G ratio is restored.
For Examples 1 to 17 and Comparative Examples 1 to 3 of Preparation Example 2 above, the D/G ratios in the Raman spectra by a Raman spectrometer (LabRAM HR Evolution, HORIBA) are shown in Table 4 below.

**[Experimental Example 2-4: Comparison of powder conductivities of graphene oxide]**

The powder conductivities of graphene oxides of Examples 1 to 17 and Comparative Examples 1 to 3 of Preparation Example 2 above were measured using a powder resistivity measurement system (HPRM-FA2, HANTech) and are shown in Table 4 below.

[Table 4]

|  | Oxygen content (at%) | Carbon/oxygen atomic ratio (C/O ratio) | (H2)/ (H1+H2) | D/G ratio | Powder conductivity (S/cm) |
|---|---|---|---|---|---|
| Example 1 | 25 | 3.0 | 0.09 | 0.8 | 3.11 |
| Example 2 | 30 | 2.3 | 0.08 | 0.82 | 2.8 |
| Example 3 | 35 | 1.9 | 0.06 | 0.85 | 2.67 |
| Example 4 | 40 | 1.5 | 0.07 | 0.88 | 1.96 |
| Example 5 | 45 | 1.2 | 0.08 | 0.9 | 1.42 |
| Example 6 | 35 | 1.9 | 0.09 | 0.75 | 1.37 |
| Example 7 | 35 | 1.9 | 0.02 | 0.8 | 2.41 |
| Example 8 | 35 | 1.9 | 0.04 | 0.85 | 1.85 |
| Example 9 | 35 | 1.9 | 0.05 | 0.9 | 1.64 |
| Example 10 | 35 | 1.9 | 0.08 | 0.95 | 0.94 |
| Example 11 | 35 | 1.9 | 0 | 0.8 | 4.25 |
| Example 12 | 35 | 1.9 | 0.02 | 0.8 | 3.24 |
| Example 13 | 35 | 1.9 | 0.04 | 0.8 | 2.94 |
| Example 14 | 35 | 1.9 | 0.05 | 0.8 | 2.87 |
| Example 15 | 35 | 1.9 | 0.08 | 0.8 | 2.45 |
| Example 16 | 35 | 1.9 | 0.1 | 0.8 | 1.52 |
| Example 17 | 35 | 1.9 | 0.12 | 0.8 | 1.12 |
| Comparative Example 1 | 23 | 3.3 | 0.34 | 0.68 | 0.78 |
| Comparative Example 2 | 47 | 1.1 | 0.11 | 1.06 | 0.17 |
| Comparative Example 3 | 52 | 0.9 | 0.14 | 1.14 | 0.09 |

Referring to Table 4, it can be confirmed that the powder conductivities of Examples 1 to 17, which have a small ratio of oxidation reaction groups, are superior to the powder conductivities of Comparative Examples 1 to 3.

**[Preparation Example 3: Preparation of reduced graphene oxide]**

To freeze-dry graphene oxide prepared in Preparation Example 2, the graphene oxide solution is sufficiently frozen and then the drying process is performed under the conditions of -80°C and 0.05 mTorr. Although drying time varies depending on sample input and surface area, the drying process is performed one day or more.

In order to restore the electrical conductivity of dried graphene oxide, the oxidation reaction group must be removed. In this Preparation Example, microwave wavelengths were injected in order to reduce graphene oxide, and reduced graphene was obtained by irradiating the 2.45 GHz wavelength region with 1,000 W for 5 to 10 seconds (Example 1).

Examples 2 to 26 and Comparative Examples 1 to 3 were prepared by varying the amount of oxidizing agent (potassium permanganate), the amount of acid (sulfuric acid), and the microwave injection time for reduced graphene oxide prepared in Example 1 above, and are shown in Table 5 below.

[Table 5]

|  | Microwave injection time |
| --- | --- |
| Example 1 | 10 seconds |
| Example 2 | 10 seconds |
| Example 3 | 10 seconds |
| Example 4 | 10 seconds |
| Example 5 | 10 seconds |
| Example 6 | 10 seconds |
| Example 7 | 10 seconds |
| Example 8 | 10 seconds |
| Example 9 | 10 seconds |
| Example 10 | 10 seconds |
| Example 11 | 10 seconds |
| Example 12 | 10 seconds |
| Example 13 | 10 seconds |
| Example 14 | 10 seconds |
| Example 15 | 10 seconds |
| Example 16 | 10 seconds |
| Example 17 | 10 seconds |
| Example 18 | 5 seconds |
| Example 19 | 5 seconds |
| Example 20 | 5 seconds |
| Example 21 | 5 seconds |
| Example 22 | 5 seconds |
| Example 23 | 5 seconds |
| Example 24 | 5 seconds |
| Example 25 | 5 seconds |
| Example 26 | 5 seconds |
| Comparative Example 1 | 10 seconds |
| Comparative Example 2 | 10 seconds |
| Comparative Example 3 | 10 seconds |

**[Experimental Example 3-1: Comparison of oxygen contents of reduced graphene oxide]**

The oxygen contents (at%) of reduced graphene oxide through XPS for Examples 1 to 26 and Comparative Examples 1 to 3 of Preparation Example 3 above are shown in Table 6 below.

**[Experimental Example 3-2: Comparison of XRD analysis of reduced graphene oxide]**

The full width at half maximums (FWHMs) of the peak in the 20° to 26.5° region of the XRD spectra for Examples 1 to 26 and Comparative Examples 1 to 3 of Preparation Example 3 above are shown in Table 6 below.

**[Experimental Example 3-3: Comparison of weight loss rate analysis of reduced graphene oxide]**

The weight loss rates for Examples 1 to 26 and Comparative Examples 1 to 3 of Preparation Example 3 above when the temperature was raised from 25°C to 500°C are shown in Table 6 below.

**[Experimental Example 3-4: Comparison of densities of reduced graphene oxide]**

The densities were measured for Examples 1 to 26 and Comparative Examples 1 to 3 of Preparation Example 3 above and are shown in Table 6 below.

**[Experimental Example 3-5: Comparison of powder conductivities of reduced graphene oxide]**

The powder conductivities for Examples 1 to 26 and Comparative Examples 1 to 3 of Preparation Example 3 above were measured using a powder resistivity measurement system (HPRM-FA2, HANTech) and are shown in Table 6 below.

[Table 6]

| | Oxygen content (at%) | Weight loss rate (wt%) | Full width at half maximum (°) | Density (g/mL) | Powder conductivity (S/cm) |
|---|---|---|---|---|---|
| Example 1 | 3 | 0.1 | 2.5 | 0.004 | 241 |
| Example 2 | 3 | 10 | 2.3 | 0.003 | 235 |
| Example 3 | 3 | 10 | 0.5 | 0.007 | 180 |
| Example 4 | 3 | 10 | 1 | 0.04 | 167 |
| Example 5 | 3 | 10 | 5.5 | 0.078 | 104 |
| Example 6 | 7 | 10 | 0.5 | 0.054 | 98 |
| Example 7 | 3 | 10 | 0.55 | 0.007 | 177 |
| Example 8 | 4.2 | 15 | 3.4 | 0.014 | 165 |
| Example 9 | 3 | 10 | 5 | 0.034 | 131 |
| Example 10 | 3 | 10 | 1 | 0.13 | 94 |
| Example 11 | 0.1 | 10 | 2 | 0.002 | 250 |
| Example 12 | 1 | 10 | 0.7 | 0.003 | 242 |
| Example 13 | 3 | 10 | 1 | 0.001 | 240 |
| Example 14 | 1 | 1 | 1.7 | 0.004 | 236 |
| Example 15 | 3 | 10 | 3 | 0.008 | 179 |
| Example 16 | 3 | 10 | 1 | 0.1 | 110 |
| Example 17 | 3 | 10 | 0.3 | 0.034 | 97 |
| Example 18 | 2.4 | 5 | 0.7 | 0.005 | 224 |
| Example 19 | 3 | 10 | 1 | 0.01 | 214 |
| Example 20 | 3 | 10 | 1.2 | 0.005 | 208 |
| Example 21 | 2.8 | 10 | 3.6 | 0.008 | 197 |
| Example 22 | 3 | 10 | 1 | 0.008 | 192 |
| Example 23 | 3 | 10 | 4 | 0.015 | 155 |
| Example 24 | 5 | 10 | 0.5 | 0.011 | 153 |
| Example 25 | 5 | 20 | 2.2 | 0.037 | 148 |
| Example 26 | 3 | 10 | 1 | 0.08 | 133 |

(continued)

|  | Oxygen content (at%) | Weight loss rate (wt%) | Full width at half maximum (°) | Density (g/mL) | Powder conductivity (S/cm) |
|---|---|---|---|---|---|
| Comparative Example 1 | 8.1 | 23 | 0.2 | 0.03 | 68 |
| Comparative Example 2 | 11.7 | 30 | 0.1 | 0.02 | 42 |
| Comparative Example 3 | 0.01 | 0 | 0 | 0.883 | 5.4 |

Hereinabove, the preferred embodiments of the present disclosure have been described in detail above, but the scope of rights of the present disclosure is not limited thereto, and various modifications and improved forms made by those skilled in the art using the basic concept of the present disclosure defined in the following claims are also fall within the scope of rights of the present disclosure.

**Claims**

1. Graphene oxide comprising oxygen (O) in an amount of 25 to 45 at%.

2. Graphene oxide of claim 1, having an atomic ratio of carbon (C) and oxygen (O) of 1.2:1 to 3:1.

3. Graphene oxide of claim 1, having an (intensity of D peak)/(intensity of G peak) (D/G ratio) of 0.80 to 0.90 in a Raman spectrum using a Raman spectrometer.

4. Graphene oxide of claim 1, satisfying the following Equation 1:

[Equation 1]

$$0 \leq (H2)/(H1+H2) < 0.1$$

In Equation 1,

H1 is a peak value for graphene oxide in which the maximum peak is observed in the range of 10° to 12° of $2\theta$ in the data graph obtained by X-ray diffraction (XRD) analysis, and
H2 is a peak value for unreacted graphite in which the maximum peak is observed in the range of 25° to 28° of $2\theta$ in the data graph obtained by XRD analysis.

5. Graphite oxide including graphene oxide of any one of claims 1 to 4.

6. Graphite oxide of claim 5, wherein graphite oxide above includes graphene oxide above in multiple layers, and graphene oxide above has an average interlayer distance of 0.7 to 0.9 nm.

7. Reduced graphene oxide in which graphene oxide of any one of claims 1 to 4 is reduced.

8. Reduced graphene oxide of claim 7, comprising oxygen (O) in an amount of more than 0 at% to not more than 5 at% based on the total content.

9. Reduced graphene oxide of claim 7, having a full width at half maximum (FWHM) of a peak in the 20 to 26.5° region of an X-ray diffraction (XRD) spectrum of 0.5 to 5°.

10. Reduced graphene oxide of claim 7, having a weight loss rate of more than 0 at% to not more than 20 wt% when the temperature is raised from 25°C to 500°C.

**11.** Reduced graphene oxide of claim 7, having a density of 0.001 to 0.1 g/mL.

## INTERNATIONAL SEARCH REPORT

| International application No. |
|---|
| **PCT/KR2022/016903** |

| | |
|---|---|
| **A. CLASSIFICATION OF SUBJECT MATTER** | |
| **C01B 32/182**(2017.01)i; **C01B 32/198**(2017.01)i; **C01B 32/23**(2017.01)i | |
| According to International Patent Classification (IPC) or to both national classification and IPC | |

**B. FIELDS SEARCHED**

Minimum documentation searched (classification system followed by classification symbols)
C01B 32/182(2017.01); C01B 31/04(2006.01)

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & keywords: 그래핀(graphene), 산화(oxide), 산소(oxygen), 환원(reduction)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0065424 A (HAESUNG DS CO., LTD.) 18 June 2018 (2018-06-18)<br>See abstract; claims 8 and 10; paragraphs [0033] and [0045]-[0049]; and tables 1 and 2. | 1-11 |
| X | EVLASHIN, S. A. et al. AMBIENT CONDITION PRODUCTION OF HIGH QUALITY REDUCED GRAPHENE OXIDE. ADVANCED SCIENCE NEWS. 2018, document no. 1800737, entire document.<br>See entire document. | 1-11 |
| A | KR 10-2016-0104430 A (INDUSTRIAL COOPERATION FOUNDATION JEONBUK NATIONAL UNIVERSITY et al.) 05 September 2016 (2016-09-05)<br>See entire document. | 1-11 |
| A | KR 10-2016-0018257 A (UNIST(ULSAN NATIONAL INSTITUTE OF SCIENCE AND TECHNOLOGY)) 17 February 2016 (2016-02-17)<br>See entire document. | 1-11 |
| A | KR 10-2016-0035162 A (IUCF-HYU (INDUSTRY-UNIVERSITY COOPERATION FOUNDATION HANYANG UNIVERSITY)) 31 March 2016 (2016-03-31)<br>See entire document. | 1-11 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 February 2023** | **28 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/016903**

| Patent document cited in search report | | | Publication date (day/month/year) | Patent family member(s) | | | Publication date (day/month/year) |
|---|---|---|---|---|---|---|---|
| KR | 10-2018-0065424 | A | 18 June 2018 | None | | | |
| KR | 10-2016-0104430 | A | 05 September 2016 | None | | | |
| KR | 10-2016-0018257 | A | 17 February 2016 | KR | 10-1702407 | B1 | 03 February 2017 |
| KR | 10-2016-0035162 | A | 31 March 2016 | KR | 10-1655535 | B1 | 07 September 2016 |